# EUROPÄISCHE PATENTSCHRIFT

(11) **EP 1 570 700 B1**
(45) Veröffentlichungstag und Bekanntmachung des Hinweises auf die Patenterteilung: **23.07.2008**
(21) Anmeldenummer: 03812559.7
(22) Anmeldetag: 09.12.2003
(51) Int. Cl.: H04Q 7/38, H04L 12/56

(54) **VERFAHREN ZUR DETEKTIERUNG DES MULTI-USER-VERHALTENS AUF DER LUFTSCHNITTSTELLE BEI GPRS- UND EGPRS-MOBILFUNKSYSTEMEN**
METHOD FOR DETECTING MULTI-USER BEHAVIOR ON THE AERIAL INTERFACE IN GPRS AND EGPRS MOBILE RADIO SYSTEMS
PROCEDE POUR DETECTER LE COMPORTEMENT MULTI-UTILISATEURS SUR L'INTERFACE HERTZIENNE DANS DES SYSTEMES DE TELEPHONIE MOBILE GPRS ET EGPRS

(30) Priorität: 09.12.2002 DE 10257630
(43) Veröffentlichungstag der Anmeldung: 07.09.2005
(73) Patentinhaber: T-Mobile Deutschland GmbH, 53227 Bonn (DE)
(72) Erfinder: VENDEL, Guido, 53123 Bonn (DE); CAM, Abdullah, 53639 Königswinter (DE); NEUSINGER, Andreas, 53572 Unkel (DE); RIEDEL, Joachim, 53520 Schuld (DE)
(74) Vertreter: Riebling, Peter
(86) Internationale Anmeldenummer: PCT/DE2003/004055
(87) Internationale Veröffentlichungsnummer: WO 2004/054301

(56) Entgegenhaltungen:
- EP-A- 1 257 096
- EP-A- 1 267 512
- US-A1- 2002 044 527

## Beschreibung

Die Erfindung betrifft teilnehmerseitige und netzseitige Verfahren zur Detektierung des Multi-User-Verhaltens auf der Luftschnittstelle bei GPRS- und EGPRS-Mobilfunksystemen, nach dem Oberbegriff des Patentanspruchs 1.

GPRS ist die Abkürzung für General Packet Radio Service (EGPRS: Enhanced GPRS) und bietet GSM-Mobilfunknetzbetreibern erstmals die Möglichkeit, paketorientierte Datendienste ohne permanente Belegung der Ressourcen der Luftschnittstelle anzubieten. GPRS unterstützt sehr viele Datenübertragungsprotokolle der höheren OSI-Schichten, unter anderem IP und X.25. Das erlaubt dem Mobilfunkteilnehmer, mit fremden Datennetzen, wie z.B. dem Internet oder den firmeninternen Intranets, zu kommunizieren. Bei GPRS kann ein Übertragungskanal (gleich Zeitschlitz) auf mehrere Teilnehmer aufgeteilt werden. Ebenfalls können einem Teilnehmer mehrere Zeitschlitze zur Datenübertragung bereitgestellt werden. Die zu übertragenden Daten werden dabei in Pakete (gleich RLC-Blöcke) aufgeteilt und über den Kanal / die Kanäle übertragen. Bei GPRS wird die Übertragungskapazität von allen GPRS-Teilnehmern einer Funkzelle geteilt. Damit es zu keinen Kollisionen des Kanals bei der Paketbelegung und zu einer Verteilung zwischen den Teilnehmer kommt, sind spezielle Protokolle für die Funkstrecke verantwortlich. Die BSS-Hersteller setzen hierfür durch ETSI spezifizierte und zusätzlich eigene entwickelte Funktionen ein.
Allgemein wird zum Thema GPRS und EGPRS auf die einschlägigen und zum Zeitpunkt der Patentanmeldung gültigen ETSI-Spezifikationen Bezug genommen.

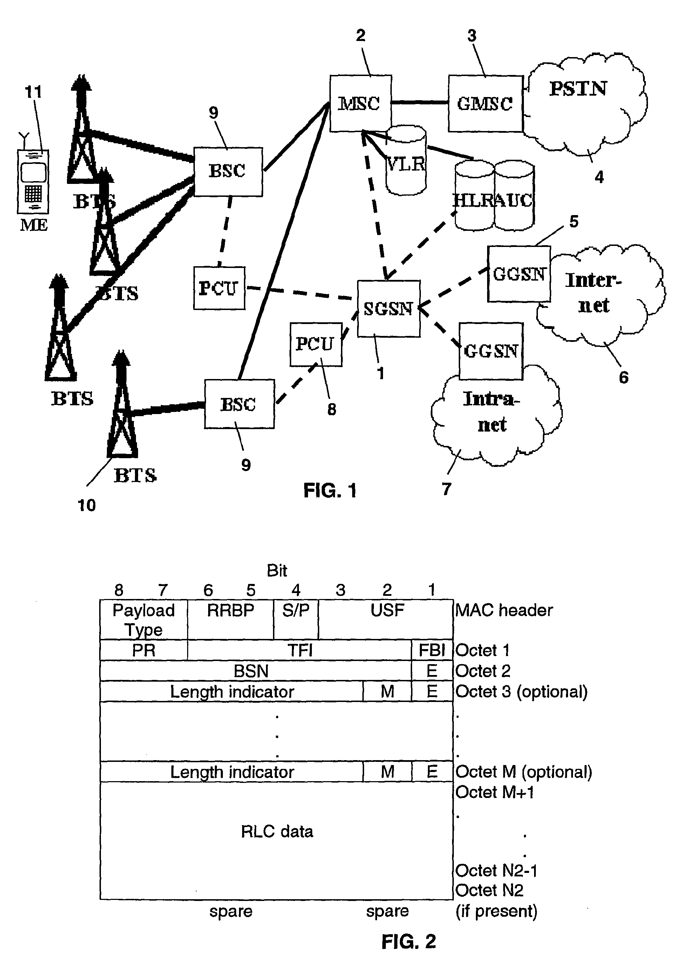

Figur 1 zeigt die Architektur eines GPRS-fähigen GSM-Mobilkommunikationsnetzes. Das GPRS System basiert auf den sogenannten GPRS Support Nodes (GSN), die die Paketvermittlung übernehmen und als Gateway zu weiteren Paketnetzen, wie Internet 6 oder Intranet 7, dienen. Die GSN sind auch für das Mobilitätsmanagement, d.h. für die Bestimmung und Kenntnis des Aufenthaltsbereiches der Teilnehmer, verantwortlich. Der GSN unterteilt sich in den SGSN und den GGSN. Der Serving GPRS Support Node (SGSN) 1 ist u. a. für das Mobilitätsmanagement verantwortlich und übernimmt für die Paketdatendienste eine ähnliche Funktion wie das Mobile Switching Center (MSC) 2 für die verbindungsorientierten Sprachsignale. Der SGSN kann über das Gs-Interface als optionales Interface mit der MSC angebunden werden. Das MSC ist über das Gateway Mobile Switching Center (GMSC) 3 z.B. mit dem öffentlichen Festtelefonnetz (PSTN) 4 verbunden. Der Gateway GPRS Support Node (GGSN) 5 hat als Gateway in GPRS-Netzen die Aufgabe, den Datenverkehr zwischen externen paketvermittelnden Übertragungsnetzen 6, 7 und dem Vermittlungsnetz des Mobilfunknetzes zu koordinieren. SGSN 1 und GGSN 5 kommunizieren über einen IP-Backbone. Der SGSN 1 muss die Datenkommunikation mit dem Funknetzteil herstellen. Dazu kommuniziert er über ein Frame Relay Backbonenetz mit den Packet Control Units (PCU) 8. Die PCU 8 ist der mit GPRS neu hinzu gekommene Anteil im BSS, die ihrerseits die Daten in den Base Station Controller (BSC) 9 einschleust und von diesem Daten bekommt. Der BSC 9 ist bereits Bestandteil des herkömmlichen GSM-Netzes und nimmt mit den Basisstationen (BTS) 10 die Kommunikation auf. Hauptaufgabe des BSC 9 ist im allgemeinen, die Funkressourcen der an ihm angeschlossenen Zellen zu verwalten, wobei ein interner Ressourcenmanager, verbunden mit entsprechenden internen Signalisierungen, die benötigten circuit-switched- und packet-switched-Ressourcen nach Bedarf (=Verkehrsangebot), zur Verfügung stehenden Kapazitäten und implementierten Regeln aufteilt. Herkömmliche "Sprachdaten" (Circuit Switched) von einem Mobilfunkendgerät (ME) 11 werden also vom BSC 9 zum MSC 2 transportiert (durchgezogene Verbindungslinien). Paketdaten werden vom BSC 9 über die PCU 8 zum SGSN 1 transportiert (gestrichelte Verbindungslinien). Die PCU 8 hat zwei Kernfunktionen für einen koordinierten Paketdatenverkehr für die Funkübertragung zu erfüllen, die durch die MAC- und durch die RLC-Protokollschicht implementiert sind. Die RLC-Schicht (Radio Link Control) segmentiert die Datenpakete, die für den Downlink vom SGSN 1 und für den Uplink vom ME kommen,für die Übertragung auf der Luftschnittstelle in mehrere kleinere Teilpakete, damit diese auf das benötigte Format gebracht werden können (Segmentierung der LLC-Frames in RLC-Blöcke). Beim Empfänger werden diese kleineren Teilpakete wieder in Datenpakete zusammengefügt (Re-Assembly der RLC-Blöcke in LLC-Frames). Damit der Empfänger die Teilpakete wieder in der richtigen Reihenfolge zusammensetzen kann, werden alle Teilpakete durchnummeriert. Die MAC-Protokollschicht (Medium Access Control) sorgt für eine Steuerung des Funkkanalzugriffs und eine Aufteilung der GPRS-Funkressourcen auf mehrere Teilnehmer. Außerdem steuert die MAC-Schicht auch die Aufhebung der Funkressourcenzuweisung für einen GPRS-Teilnehmer.

Die Qualität des angebotenen GPRS-Dienstes wird - auch gemäß den bestehenden Spezifikationen - durch mehrere Merkmale definiert und gemessen.
Eines dieser Merkmale ist der erzielte Durchsatz (Bitrate) bei der Datenübertragung.

Generell ist für den Datendurchsatz der gesamte Übertragungsweg zu betrachten:
- beginnend beim (Internet-)Server und dem Internet
- über das PSS mit den GSN-Elementen und den Übertragungsstrecken
- über das BSS mit der PCU und den Übertragungsstrecken
- bis hin zum mobilen Endsystem (ME)

In einem Mobilfunkfunknetz kommt hierbei der Übertragungsstrecke der Luftschnittstelle, d.h. von den BTS zum ME und umgekehrt, eine besondere Bedeutung zu.

Der Durchsatz auf der Luftschnittstelle wird durch mehrere Größen beeinflusst:
- durch die Multislot-Klasse (MSK) des ME, d.h. die maximale vom Endgerät unterstützte Datenrate in Empfangs- und Senderichtung,
- durch die vom Betreiber bereitgestellte Übertragungskapazität,
- durch das verwendete Kanalcodierungsschema im Allgemeinen, welches durch das bestehende C/I-Verhältnis und die systemimmanenten Entscheidungsschwellen für einen Wechsel des Schemas im Einzelnen bestimmt wird,
- durch die systemimmanenten Allokierungsverfahren der Ressource Luftschnittstelle
- und durch die Tatsache, ob diese Ressource für einen Teilnehmer alleine zur Verfügung steht oder mit anderen Teilnehmern geteilt werden muss (Multi-User-Verhalten)

In EP 1 257 096 A2 ist ein Verfahren zur Planung der Paketdatenübertragung auf von mehreren Mobilstationen benutzen Funkkanälen in GSM-GPRS Mobilfunknetzwerken. Hierbei werden, gemäß dem Oberbegriff des Anspruchs 1 der vorliegenden Erfindung, zur Detektierung des Multi-User-Verhaltens auf der Luftschnittstelle während einer Übertragung von Teilnehmerdaten auf der Luftschnittstelle, sowohl im Uplink als auch im Downlink, in den Teilnehmerdaten enthaltene Zusatzinformationen durch eine netzseitig und/oder teilnehmerseitig vorgesehene Einrichtung erfasst und ausgewertet.

Die EP 1 267 512 A1 lehrt ein Verfahren zur Erfassung der Übertragungsqualität bei Kommunikationssystemen, wobei hier während einer Übertragung von Teilnehmerdaten auf der Luftschnittstelle in den Teilnehmerdaten enthaltene Zusatzinformationen durch netzseitig und/oder teilnehmerseitig vorgesehene Einrichtungen erfasst werden.

Die heutigen Mess-, Auswerte- und Bewertungs-Systeme (im Nachfolgenden nur noch Messsysteme genannt), erlauben Aussagen zum verwendeten Kanalcodierungsschema und zur Anzahl der genutzten Zeitschlitze. Bei den heute verwendeten Messsystemen fehlt jedoch die Möglichkeit, eine detaillierte Aussage zum Multi-User-Verhalten auf den Übertragungskanälen (Zeitschlitzen) zu treffen.

Die Aufgabe der Erfindung besteht darin, ein Verfahren zur Detektierung des Multi-User-Verhaltens auf der Luftschnittstelle bei (E)GPRS-Mobilfunksystemen anzugeben, durch welches das Multi-User-Verhalten auf den Zeitschlitzen erkannt und detailliert ausgewertet werden kann.

Diese Aufgabe wird erfindungsgemäß durch die Merkmale des Patentanspruchs 1 gelöst.

Bevorzugte Ausgestaltungen und Weiterbildungen der Erfindung sind in den Unteransprüchen angegeben.

Das Grundprinzip des Lösungsvorschlages besteht darin, dass die Messsysteme während der Übertragung bzw. des Empfangs der Teilnehmerdaten die generierbaren Informationen der Luftschnittstelle, welche eine Aussage über ein Multi-User-Verhalten zulassen, sammeln und auswerten.

Hierbei müssen im Detail, je nachdem, ob Teilnehmer- oder Netzseite betrachtet werden, unterschiedliche Mechanismen für Uplink (UL) und Downlink (DL) angewendet werden.

Der Vorschlag basiert aber auf der Grundidee, mit dem Start des TBF (Temporary Block Flow), d.h. der Übertragung von Paketdaten zwischen dem Endgerät und der PCU, die Anzahl der genutzten RLC-Blöcke der tatsächlich möglichen und somit nutzbaren Anzahl von RLC-Blöcken gegenüber zu stellen und die Anzahl der anderen (parallelen) Teilnehmer auf den genutzten Zeitschlitzen (für die Teilnehmerseite z.B. anhand von in den RLC-Blöcken befindlichen Zusatzinformationen) zu identifizieren.
Sofern nicht anders vermerkt, wird im Nachfolgenden mit dem Begriff "RLC-Blöcke" sowohl die Kategorie der RLC-Daten-Blöcke als auch die der RLC/MAC-Kontroll-Blöcke beschrieben.

Zu beachten ist ferner, dass im mobilen Datentransfer Zellwechsel auftreten. Von daher ist die Auswertung zum einen für jeden TBF durchzuführen, zum anderen jedoch auch als Zusammenfassung aller TBFs, die zum Transfer dazu gehören.

Aufgrund des möglichen Multi-Slot-Betriebes der Messsysteme müssen die Mess- und Auswertemodalitäten entsprechend konzipiert werden.

Im Nachfolgenden erfolgt eine Beschreibung gegliedert nach Teilnehmerseite und Netzseite.

### Teilnehmerseite

### Verfahren für den Uplink

Die Ressource RLC-Blöcke wird den Teilnehmern durch die Netzseite zugeteilt. Hierbei bestehen zwei Verfahren: das statische und das dynamische Zuteilungsverfahren; das dynamische ist jedoch das gängige verwendete Zuteilungsverfahren.

Beim dynamischen Zuteilungsverfahren wird den ME über das sogenannte Uplink State Flag (USF) in den DL-RLC-Blöcken mitgeteilt, welche UL-RLC-Blöcke von den jeweiligen ME genutzt werden dürfen. Dieses USF steht im MAC-Header eines jeden DL-RLC-Daten- und DL-RLC/MAC-Kontroll-Blockes, den die mobilen Endsysteme solange auswerten müssen, bis sämtliche UL-Daten übertragen wurden.

Das USF wird im sogenannten TBF-Establishment-Prozess dem TBF, der gekennzeichnet ist durch den TFI, und somit dem ME/Teilnehmer zugeordnet.

Die teilnehmerseitigen Messsysteme müssen also - bezogen auf die genutzten Zeitschlitze - mit dem Start des TBF feststellen, ob alle UL-RLC-Blöcke nur durch diesen TBF bis zu seinem Ende belegt waren, oder ob auch andere Teilnehmer diese UL-RLC-Blöcke genutzt haben. Über die Anzahl der verschiedenen USF kann dann auf die Anzahl paralleler, also gleichzeitiger ME/Teilnehmer geschlossen werden, d.h. eine Aussage über das Multi -User-Verhalten getroffen werden. Diese Feststellung lässt auch eine Aussage über den möglichen Durchsatz zu.

Bei statischen Zuteilungsverfahren erfolgt die Zuteilung jeweils über die Nachricht PACKET_UL_ASSIGNMENT. Folglich kann bei diesem Verfahren nur mittels einer Auszählung der RLC-Blöcke eine Abschätzung über die Nutzung der Zeitschlitze getroffen werden.

### Verfahren für den Downlink

Für den DL teilt ebenfalls die Netzseite die Ressourcen zu. Hierbei kommen unterschiedliche Verfahren des jeweiligen BSS-Herstellers zur Anwendung.
Im Rahmen des TBF-Establishment Prozesses werden wiederum TBF und TFI vergeben. Für die Detektierung des Multi-User-Verhaltens im Downlink wird der TFI herangezogen. Dieser TFI ist Bestandteil des DL-RLC-Headers bzw. DL-RLC/MAC-Kontroll-Blockes.

Ab dem Start des TBF zur Datenübertragung müssen die teilnehmerseitigen Messsysteme wiederum feststellen, ob alle DL-RLC-Blöcke nur von diesem einen TBF/TFI genutzt werden oder nicht. Dies ist für jeden genutzten Zeitschlitz durchzuführen. Diese Feststellung lässt wiederum eine Aussage über das Multi - User-Verhalten zu.

Bei EGPRS gelten generell die gleichen Grundprinzipien wie bei GPRS. Die EGPRS Datenblöcke besitzen einen RLC/MAC-Header, der die entsprechenden Informationen beinhaltet. Im Unterschied zu GPRS sind allerdings die Header-Formate und -Typen je nach verwendetem Modulations- und Coding-Schema unterschiedlich.

### Netzseite

Da BSC und PCU die Ressourcenzuteilung auf der Luftschnittstelle sowohl für den Uplink als auch für den Downlink vornehmen, sind grundsätzlich die Einzelinformationen zu
- Anzahl der Teilnehmer (TBF/TFI),
- Aufteilung auf RLC-Blöcke und
- Anzahl sowie Aufteilung genutzter Übertragungskanäle / Zeitschlitze bekannt.
Ein netzseitiges Messsystem muss für jeden TBF/TFI diese vorliegenden Einzelinformationen zu einer Gesamtinformation im Hinblick auf die Fragestellung eines Multi-User-Betriebes für den betreffenden TBF/TFI zusammenstellen.
Es werden hierbei dieselben Verfahren bzw. Methoden für den Uplink bzw. Downlink verwendet.

Bei den bisherigen Methoden und Verfahren zur Messung und Auswertung der Qualität und zur Analyse möglicher Fehlverhalten konnte eine Reduzierung des individuellen Datendurchsatzes aufgrund von gleichzeitiger Nutzung der Ressource "Zeitschlitz" durch mehrere ME / Teilnehmer weder ausgeschlossen noch bestätigt werden.
Im Gegensatz dazu kann eine Implementierung der erfindungsgemäßen Verfahren (sowohl separat für jede Seite als auch zusammen) und der sich dadurch eröffnenden Analysemöglichkeiten im Rahmen der Auswerteprozesse direkt aufzeigen, wo effizient und vor allem nachfrageorientiert durch eine sinnvolle Erhöhung der Kapazität die Qualität für den Teilnehmer markant gesteigert werden kann.

Durch Kombination mit anderen Auswerteansätzen lässt sich ein weiterer Schritt in Richtung Qualitätsanalyse machen, z.B. Kombination mit der Feststellung der genutzten Kanalcodierungsschemas auf RLC-Daten-Block - Basis oder Feststellung der Empfangspegelverhältnisse.

Nachfolgend wird die Erfindung anhand der Zeichnungsfiguren näher erläutert. Aus den Zeichnungen und den zugehörigen Erläuterungen ergeben sich weitere Merkmale, Vorteile und Anwendungen der Erfindung.
Es zeigen:
- Figur 1:: Architektur eines GSM-GPRS Netzwerkes;
- Figur 2:: Format eines GPRS Downlink RLC-Daten-Blocks mit MAC-Header;
- Figur 3:: Format eines GPRS Downlink RLC/MAC-Kontroll-Blocks mit MAC-Header;
- Figur 4:: Format eines EGPRS Downlink RLC-Daten-Block-Headers für MCS-7, MCS-8 and MCS-9;
- Figur 5:: Format eines EGPRS Downlink RLC-Daten-Block-Headers für MCS-5 and MCS-6;
- Figur 6:: Format eines EGPRS Downlink RLC-Daten-Block-Headers für MCS-1, MCS-2, MCS-3 and MCS-4;

### Verfahren bei GPRS

Um zu detektieren, ob ein Multi-User-Betrieb zum Zeitpunkt der Datenübertragung aufgetreten ist, müssen
- für die gesamte Lebensdauer des betrachteten Uplink- bzw. des Downlink-TBF
- auf allen, dem betrachteten TBF zugewiesenen Zeitschlitzen (es ist Multi-Slot-Betrieb möglich!)
- sowohl die RLC-Daten- als auch die RLC/MAC-Kontroll-Blöcke
- für alle zu diesem Zeitpunkt bestehenden TBF (eigener und fremder!) ausgewertet werden.

Für das teilnehmerseitige Messsystem bedeutet dies, dass RLC-Blöcke, die nicht zum eigenen TBF gehören, nicht verworfen werden dürfen.
Das Auswerte- / Bewertungssystem bzw. die entsprechende Software müssen alle entsprechenden Informationen in die Auswertung einbeziehen; nicht nur die, die zum betrachteten TBF gehören.

Da in einer mobilen Datenübertragung Zellwechsel auftreten, ist dieser Aspekt bei der Auswertung zu berücksichtigen. Veränderungen sowohl im Multi-Slot-Betrieb als auch im Multi-User-Verhalten sind nach einem Zellwechsel wahrscheinlich.

Gemäß dem Standard ist die Funktion "Delayed TBF" vorgesehen. Die Implementierung ist nach Systemtechnik und nach Uplink und Downlink unterschiedlich.
Der Inhalt dieser RLC-Blöcke sind sogenannte "Dummy Blöcke".
Eine Zählung / Bewertung muss beim eigenen TBF demnach mit der Übertragung von Nutzdaten abschließen.

### Anforderung zur Detektierung der Situation im Uplink (teilnehmerseitiges Messsystem)

Die Verteilung / Zuteilung der RLC-Blöcke für den Uplink erfolgt durch die Netzseite.

Das derzeit gängige Zuteilungsverfahren ist das dynamische Zuteilungsverfahren. Bei diesem Verfahren wird der ME über das Uplink State Flag (USF) mitgeteilt, welche RLC-Blöcke für den bestehenden TBF verwendet werden dürfen.

Das USF befindet sich im MAC-Header in jedem RLC-Daten- und RLC/MAC-Kontroll-Block des Downlinks.

Der Downlink RLC-Daten-Block zusammen mit seinem MAC-Header besitzt das in Figur 2 gezeigte Format. Das USF ist durch die ersten drei Bits im MAC-Header beschrieben.

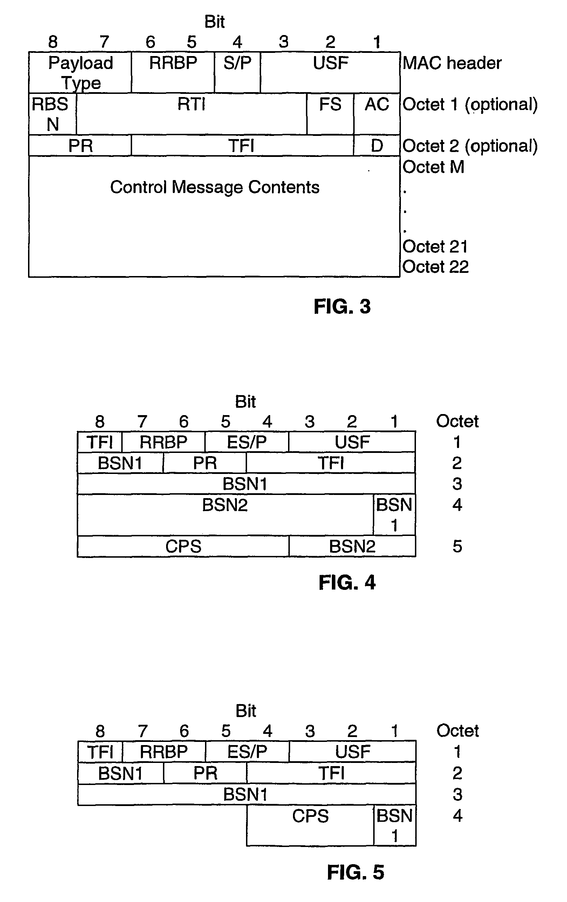

Der Downlink RLC/MAC-Kontroll- Block zusammen mit seinem MAC-Header in Figur 3 dargestellt. Auch hier ist das USF durch die ersten drei Bits im MAC-Header beschrieben.

Im Rahmen des TBF-Establishment - Prozesses wird einem UL-TBF ein bestimmtes USF zugeordnet.

Für die Dauer eines UL-TBF muss also durch die Messsysteme für die durch den TBF belegten Zeitschlitze ermittelt werden, ob noch andere USF -als die zum etablierten UL-TBF zugehörig- durch die Netzseite vergeben werden.

Im Rahmen der Messung / der Auswertung können dann folgende Aussagen getroffen werden:
- Fand ein Multi-User-Betrieb statt - generell?
- Welche Zeitschlitze sind von diesem Multi-User-Betrieb betroffen?
- Wie viele parallele Nutzer gab es je Zeitschlitz?
- In welchem Verhältnis steht die Anzahl der selbst genutzten RLC-Blöcke zur Anzahl der fremd genutzten RLC-Blöcke bzw. zur Gesamtanzahl der RLC-Blöcke im TBF-Zeitraum?

### Anforderung zur Detektierung der Situation im Downlink (teilnehmerseitiges Messsystem)

Für den Downlink erfolgt die Verteilung der RLC-Blöcke durch die Netzseite.
Bei Multi-User-Betrieb existieren systemtechnik-spezifische Zuteilungsverfahren.

Zur Detektierung des Verhaltens im Downlink ist ein anderer Parameter aus den beiden möglichen RLC-Downlink-Blöcken auszuwerten.
Es handelt sich hierbei um den TFI, der eindeutig einem (DL-) TBF beim Assignment zugeordnet wird.

Im Gegensatz zum USF steht dieser Parameter nicht im MAC-Header, sondern im RLC-Header und belegt hier die Bits 2-6 im ersten Oktett bzw. steht im RLC/MAC-Kontroll-Block und belegt hier die Bits 2-6 im zweiten Oktett.
Solange ein Datentransfer im DL noch andauert, ist die ME jedoch gezwungen, jeden RLC-DL-Block dahingehend auszuwerten, ob dieser RLC-Block für den zugeordneten TBF / TFI bestimmt ist. Ist dies nicht der Fall, würde dieser RLC-Block von der MS verworfen.

Im Rahmen der Messung / der Auswertung kann dann wiederum ermittelt werden:
- Fand ein Multi-User-Betrieb statt - generell?
- Welche Zeitschlitze sind von diesem Multi-User-Betrieb betroffen?
- Wie viele parallele Nutzer gab es je Zeitschlitz?
- In welchem Verhältnis steht die Anzahl der selbst genutzten RLC-Blöcke zur Anzahl der fremd genutzten RLC-Blöcke bzw. zur Gesamtanzahl der RLC-Blöcke im TBF-Zeitraum?

### Verfahren bei EGPRS

Bei EGPRS gelten generell die gleichen Grundprinzipien wie bei GPRS.

Die EGPRS Datenblöcke besitzen einen RLC/MAC-Header, der die entsprechenden Informationen beinhaltet. Im Unterschied zu GPRS sind allerdings die Header-Formate und -Typen je nach verwendetem Modulations- und Codierungsschema (MCS) unterschiedlich. Es wird zwischen den Modulations- und Codierungsschemata MCS-1 bis MCS-9 unterschieden.

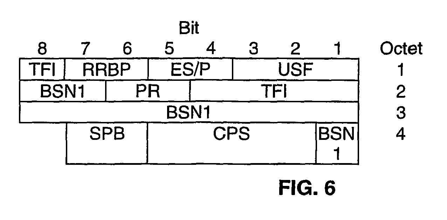

Der kombinierte EGPRS Downlink RLC/MAC-Header für die Modulations- und Codierungsschemata MCS-7, MCS-8 and MCS-9 (Headertyp 1) besitzt das in Figur 4 gezeigte Format.
Der kombinierte EGPRS Downlink RLC/MAC-Header für die Modulations- und Codierungsschemata MCS-5 and MCS-6 (Headertyp 2) besitzt das in Figur 5 gezeigte Format.
Der kombinierte EGPRS Downlink RLC/MAC-Header für die Modulations- und Codierungsschemata MCS-1, MCS-2, MCS-3 and MCS-4 (Headertyp 3) besitzt das in Figur 6 gezeigte Format.
Bei allen Headertypen findet sich das USF in den ersten drei Bit des ersten Oktetts.
Das TFI umfasst die ersten 4 Bit des zweiten Oktetts.

Die Analyse des Multi-User-Betriebs erfolgt somit analog zu GPRS für den Uplink über die Auswertung des Uplink State Flags (USF) und für den Downlink über den Temporary Flow Identifier (TFI).

Ein Beispiel für eine mögliche Triggerung der Datenerfassung bzw. -auswertung ist nachfolgend gegeben (Beschreibung sowohl für Teilnehmer- als auch für Netzseite):

### Triggerung für den Uplink

Der "klassische" Aufbau eines Uplink-TBF erfolgt via RACH oder PRACH.

Die relevanten Nachrichten lauten:
- CHANNEL_REQUEST (für GPRS / auf RACH)
- PACKET_CHANNEL_REQUEST (für GPRS / auf PRACH)
- EGPRS_PACKET_CHANNEL_REQUEST (für EGPRS / auf RACH oder PRACH)

Soll nur der applikationsgesteuerte Datentransfer analysiert werden, sind folgende Informationselemente (IE) aus den o. a. Nachrichten zu berücksichtigen:
- Two Phase Access Request bzw. Single Block Packet Access
- Short Access Request

Bei EGPRS wird bei der Ressourcenanforderung noch unterschieden, ob ein Kanal mit oder ohne 8PSK-Modulation zur Verfügung gestellt werden soll.

Relevant für die Auswertung sind bzw. werden dann die RLC-Daten-Blöcke, die ab der/dem in der PACKET_UPLINK_ASSIGNMENT - Nachricht bezeichneten Zeit, Zeitschlitz und Frame übertragen werden.

Eine andere Kategorie bildet die Ressourcenanfrage über den Kanal: PACCH.

Die relevante Nachricht lautet:
PACKET_DOWNLINK_ACK/NACK mit dem IE: Channel Request Description

Eine Ressourcenzuteilung erfolgt mittels der Nachrichten:
PACKET_UPLINKK_ASSIGNMENT oder PACKET_TIMESLOT_RECONFIGURE

Wird im Netz "Fixed Allocation" verwendet, kann eine Ressourcenzuweisung ebenfalls über die Nachricht PACKET_UPLlNK_ACK/NACK erfolgen.

Als Endpunkt für die Triggerung wird der RLC-Daten-Block angesehen, bei dem das Countdown-Value den Wert "0" erreicht hat und die Übertragung/Dekodierung dieses RLC-Blockes mit einer ACK-Nachricht von der Netzseite bestätigt wurde.

### Triggerung für den Downlink

Wie für den Uplink existiert eine "klassische" Variante: mittels des Pagings.

Die relevanten Nachrichten hierfür sind:
- PAGING_REQUEST (via PCH)
- PACKET_PAGING_REQUEST (via PPCH)

Relevant für die Auswertung werden dann die RLC-Daten-Blöcke, die ab der/dem in der PACKET_DOWNLINK_ASSIGNMENT - Nachricht bezeichneten Zeit, Zeitschlitz und Frame übertragen werden.

Befindet sich die MS im READY State erfolgt die Zuweisung nur über die Nachricht:
PACKET_DOWNLINK_ASSIGNMENT.

Auch eine Zuweisung über den PACCH mittels der Nachricht:
PACKET_TIMESLOT_RECONFIGURE ist möglich.

Als Endpunkt für die_Triggerung wird der RLC-Daten-Block angesehen, bei dem das "Final Bit" gesetzt ist und die Übertragung/Dekodierung dieses RLC-Blockes mit einer ACK-Nachricht von der Teilnehmerseite bestätigt wurde.

Das Messsystem unterstützt mit zugeschnittenen Auswertungen und Bewertungen (Statistiken und Visualisierungen u. a. für MultiSlot, MultiUser und/oder MultiUsage) die erzielten Ergebnisse.

### Verzeichnis der Bezugszeichen und Abkürzungen

| | | |
|---|---|---|
| 1 | SGSN | Serving GPRS Support Node |
| 2 | MSC | Mobile Switching Center |
| 3 | GMSC | Gateway Mobile Switching Center |
| 4 | PSTN | Public Switched Telephone Network |
| 5 | GGSN | Gateway GPRS Support Node |
| 6 | Internet | |
| 7 | Intranet | |
| 8 | PCU | Packet Control Unit |
| 9 | BSC | Base Station Controller |
| 10 | BTS | Base Transceiver Station |
| 11 | ME | Mobiles Endgerät |

| | |
|---|---|
| AUC | Authentication Center |
| BSS | Base Station Subsystem (BTS + BSC+PCU) |
| DL | Downlink |
| EGPRS | Enhanced GPRS |
| GPRS | General Packet Radio Service |
| GSN | GPRS Support Node |
| HLR | Home Location Register |
| LLC | Logical Link Control |
| MAC | Medium Access Control |
| MCS | Modulations- und Codierungs Schema |
| PSS | Packet Switched Subsystem |
| RLC | Radio Link Control |
| TBF | Temporary Block Flow |
| TFI | Temporary Flow Identifier |
| UL | Uplink |
| USF | Uplink State Flag |
| VLR | Visitior Location Register |

## Patentansprüche

1. Verfahren zur Detektierung des Multi-User-Verhaltens auf der Luftschnittstelle bei GPRS- und EGPRS-Mobilfunksystemen, wobei während einer Übertragung von Teilnehmerdaten auf einem Übertragungskanal der Luftschnittstelle, sowohl im Uplink als auch im Downlink in den Teilnehmerdaten enthaltene Zusatzinformationen durch eine netzseitig und/oder teilnehmerseitig vorgesehene Einrichtung erfasst und ausgewertet werden,
**dadurch gekennzeichnet,**
**dass** mit dem Start eines Temporary Block Flow, TBF, auf einem dem Übertragungskanal zugeordneten Zeitschlitz die Anzahl der auf dem Zeitschlitz genutzten Radio Link Control Blöcke, RLC-Blöcke, der tatsächlich nutzbaren Anzahl von RLC-Blöcken auf dem Zeitschlitz gegenübergestellt wird, und die Anzahl der parallelen Teilnehmer auf dem genutzten Zeitschlitz anhand der in den RLC-Blöcken befindlichen Zusatzinformationen identifiziert wird.

2. Verfahren nach Anspruch 1, **dadurch gekennzeichnet, dass** als Zusatzinformationen die Parameter Uplink Status Flag, USF, und/oder Temporary Flow Identifier, TFI, ausgewertet werden.

3. Verfahren nach einem der vorhergehenden Ansprüche, **dadurch gekennzeichnet, dass** für die Dauer eines Uplink-TBF ermittelt wird, wie viele USF durch die Netzseite vergeben werden.

4. Verfahren nach einem der vorhergehenden Ansprüche, **dadurch gekennzeichnet, dass** für die Dauer eines Downlink-TBF ermittelt wird, wie viele TFI durch die Netzseite vergeben werden.

5. Verfahren nach einem der vorhergehenden Ansprüche, **dadurch gekennzeichnet, dass** die Identifikation der USF und/oder TFI zum einen für jeden TBF und zum anderen auch als Zusammenfassung aller TBFs, die zum Transfer dazu gehören, erfolgt.

6. Verfahren nach einem der vorhergehenden Ansprüche, **dadurch gekennzeichnet, dass** bei statischen Zuteilungsverfahren für die RLC-Blöcke die Nutzung der Zeitschlitze mittels einer Auszählung der Datenrahmen ermittelt wird.

7. Verfahren nach einem der vorhergehenden Ansprüche, **dadurch gekennzeichnet, dass** für die gesamte Lebensdauer des betrachteten Uplink- bzw. des Downlink-TBF auf allen, dem betrachteten TBF zugewiesenen Zeitschlitzen, sowohl die RLC-Daten- als auch die RLC/MAC-Kontroll- Blöcke für alle zu diesem Zeitpunkt bestehenden TBF ausgewertet werden, und anhand dieser Daten bestimmt wird, ob ein Multi-User-Betrieb zum Zeitpunkt der Datenübertragung aufgetreten ist.

8. Vorrichtung zur Durchführung des Verfahrens gemäß einem der Ansprüche 1 bis 7, **dadurch gekennzeichnet,**
**dass** im Mobilfunknetz netzseitig und/oder teilnehmerseitig Einrichtungen vorgesehen sind
zur Erfassung von Zusatzinformationen, die in den auf der Luftschnittstelle im Downlink und Uplink auf einem Übertragungskanal übertragenen Teilnehmerdaten enthalten sind, und
zur Gegenüberstellung der Anzahl der auf einem dem Übertragungskanal zugeordneten Zeitschlitz genutzten Radio Link Control Blöcke, RLC-Blöcke, und der tatsächlich nutzbaren Anzahl von RLC-Blöcken auf dem Zeitschlitz.

9. Vorrichtung nach Anspruch 8, **dadurch gekennzeichnet, dass** die Einrichtungen in der Packet Control Unit, PCU, (8) vorgesehen sind.

10. Vorrichtung nach Anspruch 8 oder 9, **dadurch gekennzeichnet, dass** die Einrichtungen ein teilnehmerseitiges Messsystem umfassen, das mit einem Mobilfunkendgerät zusammenwirkt oder in dieses integriert ist.

11. Vorrichtung nach einem der Ansprüche 8 bis 10, **dadurch gekennzeichnet, dass** die Zusatzinformationen die Parameter USF und/oder TFI umfassen.

## Claims

1. Method for detecting multi-user behaviour on the air interface in GPRS and EGPRS mobile communications systems, wherein during a transmission of subscriber data on a transmission channel of the air interface supplementary information contained in the subscriber data both in the uplink and in the downlink is captured and evaluated by a device provided on the network side and/or at the subscriber end, **characterised in that** at the start of a temporary block flow, TBF, on a time slot assigned to the transmission channel the number of radio link control blocks, RLC blocks, used on the time slot is contrasted with the actually usable number of RLC blocks on the time slot and the number of parallel subscribers on the time slot used is identified on the basis of the supplementary information present in the RLC blocks.

2. Method according to claim 1, **characterised in that** the parameters uplink status flag, USF, and/or temporary flow identifier, TFI, are evaluated as supplementary information.

3. Method according to any of the preceding claims, **characterised in that** for the duration of an uplink TBF it is determined how many USFs are issued by the network side.

4. Method according to any of the preceding claims, **characterised in that** for the duration of a downlink TBF it is determined how many TFIs are issued by the network side.

5. Method according to any of the preceding claims, **characterised in that** the identification of the USFs and/or TFIs ensues, on the one hand, for every TBF and, on the other hand, also in summary for all TBFs belonging thereto for the transfer.

6. Method according to any of the preceding claims, **characterised in that** in the case of static assignment modes for the RLC blocks the usage of the time slot is determined by counting the data frames.

7. Method according to any of the preceding claims, **characterised in that** for the entire operating life of the uplink or downlink TBF under consideration on all time slots allocated to the TBF considered both the RLC data and the RLC/MAC control blocks are evaluated for all TBFs existing at this point in time and on the basis of these data it is determined whether multi-user operation occurred at the time of transmission.

8. Device for carrying out the method according to any of claims 1 to 7, **characterised in that** in the mobile communications network devices are provided on the network side or at the subscriber end for capturing supplementary information contained in subscriber data transmitted on the air interface in downlink and uplink on a transmission channel and for comparing the number of radio link control blocks, RLC blocks, used on a time slot assigned to the transmission channel with the actually usable number of RLC blocks on the time slot.

9. Device according to claim 8, **characterised in that** the devices are provided in the packet control unit, PCU, (8).

10. Device according to claim 8 or 9, **characterised in that** the devices comprise a measuring system at the subscriber end which acts in conjunction with a mobile communications terminal device or is integrated in the latter.

11. Device according to any of claims 8 to 10, **characterised in that** the items of supplementary information comprise the parameters USF and/or TFI.

## Revendications

1. Procédé pour détecter le comportement multi-utilisateur sur l'interface air dans des systèmes de téléphonie mobile GPRS et EGPRS, selon lequel pendant une transmission de données d'abonné sur un canal de transmission de l'interface air, les informations supplémentaires contenues dans les données d'abonné aussi bien dans la liaison montante que dans la liaison descendante sont enregistrées et analysées par un dispositif prévu côté réseau et/ou côté abonné,
**caractérisé en ce qu'**avec le démarrage d'un flux temporaire de blocs, TBF, sur un créneau temporel affecté au canal de transmission le nombre de blocs de contrôle de liaison radio, RLC, utilisés sur ledit créneau est comparé au nombre réellement utilisable de blocs RLC sur le créneau, et le nombre d'abonnés parallèles sur le créneau utilisé est identifié à l'aide d'informations supplémentaires qui se trouvent dans les blocs RLC.

2. Procédé selon la revendication 1, **caractérisé en ce qu'**on analyse comme informations supplémentaires les paramètres USF (indicateur d'état montant) et/ou TFI (identificateur de flux temporaire).

3. Procédé selon l'une des revendications précédentes, **caractérisé en ce que** pour la durée d'un TBF montant, on détermine combien d'USF sont fournis par le côté réseau.

4. Procédé selon l'une des revendications précédentes, **caractérisé en ce que** pour la durée d'un TBF descendant, on détermine combien de TFI sont fournis par le côté réseau.

5. Procédé selon l'une des revendications précédentes, **caractérisé en ce que** l'identification des USF et/ou TFI se fait d'une part pour chaque TBF et d'autre part, également, comme groupement de tous les TBF qui appartiennent au transfert.

6. Procédé selon l'une des revendications précédentes, **caractérisé en ce qu'**avec des procédés d'attribution statiques pour les blocs RLC, l'utilisation des créneaux temporels est déterminée à l'aide d'un comptage des trames de données.

7. Procédé selon l'une des revendications précédentes, **caractérisé en ce que** pour toute la durée de vie du TBF montant ou descendant considéré, sur tous les créneaux attribués au TBF considéré les blocs de données RLC comme les blocs de commande RLC/MAC sont analysés pour tous les TBF existant à ce moment-là, et on définit à l'aide de ces données si un fonctionnement multi-utilisateur est survenu au moment de la transmission de données.

8. Dispositif pour la mise en oeuvre du procédé selon l'une des revendications 1 à 7, **caractérisé en ce qu'**il est prévu dans le réseau de téléphonie mobile, côté réseau et/ou côté abonné, des dispositifs
pour l'enregistrement d'informations supplémentaires qui sont contenues dans les données d'abonné transmises sur l'interface air dans la liaison descendante et dans la liaison montante sur un canal de transmission, et
pour la comparaison du nombre de blocs de contrôle de liaison radio, RLC, utilisés sur un créneau temporel attribué au canal de transmission, et du nombre réellement utilisable de blocs RLC sur le créneau temporel.

9. Dispositif selon la revendication 8, **caractérisé en ce que** les dispositifs sont prévus dans l'unité de contrôle des paquets, PCU, (8).

10. Dispositif selon la revendication 8 ou 9, **caractérisé en ce que** les dispositifs comprennent un système de mesure prévu côté abonné, qui coopère avec un terminal de téléphonie mobile ou qui est intégré dans celui-ci.

11. Dispositif selon l'une des revendications 8 à 10, **caractérisé en ce que** les informations supplémentaires comprennent les paramètres USF et/ou TFI.
